# EUROPÄISCHE PATENTSCHRIFT

(11) **EP 3 867 122 B1**
(45) Veröffentlichungstag und Bekanntmachung des Hinweises auf die Patenterteilung: **19.07.2023**
(21) Anmeldenummer: 19773770.3
(22) Anmeldetag: 18.09.2019
(51) Int. Cl.: B61D 19/02, B61D 19/00, B60J 10/24, B60J 10/248, B60J 10/86

(54) **SCHWENKSCHIEBETÜRVORRICHTUNG ZUR ANORDNUNG IN EINER TÜRÖFFNUNG EINES TÜRRAHMENS EINES FAHRZEUGS**
PIVOTING AND SLIDING DOOR DEVICE FOR ARRANGEMENT IN A DOOR OPENING OF A DOOR FRAME OF A VEHICLE
SYSTÈME DE PORTE LOUVOYANTE-COULISSANTE DESTINÉ À ÊTRE AGENCÉ DANS UNE OUVERTURE DE PORTE D'UN ENCADREMENT DE PORTE D'UN VÉHICULE

(30) Priorität: 15.10.2018 DE 102018008139
(43) Veröffentlichungstag der Anmeldung: 25.08.2021
(73) Patentinhaber: Knorr-Bremse Gesellschaft mit beschränkter Haftung, 2340 Mödling (AT)
(72) Erfinder: GUGGENBICHLER, Stefan, 4020 Linz (AT); WEINBERGMAIR, Daniel, 4441 Behamberg (AT); HIRTENLEHNER, Thomas, 3354 Wolfsbach (AT); WILFLINGER, Johann, 4030 Linz (AT)
(74) Vertreter: Wiedemann, Markus
(86) Internationale Anmeldenummer: PCT/EP2019/074973
(87) Internationale Veröffentlichungsnummer: WO 2020/078650

(56) Entgegenhaltungen:
- EP-A1- 3 269 613
- WO-A1-2018/091123
- DE-A1-102017 002 018
- DE-U1- 20 311 653
- DE-U1-202008 002 914
- DE-U1-202014 104 110

## Beschreibung

Die Erfindung geht aus von einer Schwenkschiebetürvorrichtung zur Anordnung in einer Türöffnung eines Fahrzeugs, insbesondere eines Schienenfahrzeugs, gemäß dem Oberbegriff von Anspruch 1. Weiterhin betrifft die Erfindung auch ein Schienenfahrzeug mit wenigstens einer solchen Schwenkschiebetürvorrichtung gemäß Anspruch 22.

Fahrzeuge zum Massentransport von Personen weisen oftmals Schwenkschiebetüren oder Faltklapptüren auf, durch welche Passagiere in das Fahrzeug ein- und aussteigen können. Bei einer solchen Schwenkschiebetüre öffnet und schließt sich der wenigstens eine Türflügel durch eine Kombination von einer ersten Bewegungsrichtung und einer zweiten Bewegungsrichtung, wobei die erste Bewegungsrichtung senkrecht zu einer Außenfläche des Fahrzeugs und die zweite Bewegungsrichtung parallel zur Außenfläche des Fahrzeugs ist. Dadurch kann in platzsparender Weise die Türöffnung freigeben werden und am oder im Fahrzeug wartende Personen werden nicht durch ein Ausschwenken des Türflügels behindert. Durch die Verwendung von Schwenkschiebetüren wird daher erreicht, dass das Ein- und Aussteigen der Passagiere schnell vonstattengehen kann. Eine weitere Anforderung an solche Schwenkschiebetürvorrichtungen besteht darin, den Innenraum des Fahrzeugs mit Hilfe einer Türdichtungsvorrichtung nach außen abzudichten.

Eine gattungsgemäße Schwenkschiebetürvorrichtung bzw. ein gattungsgemäßes Schienenfahrzeug sind aus EP 3 269 613 A1 bekannt. Dort ist die untere Türdichtung als Elastomerkörper mit zwei Dichtlippen ausgebildet, welcher an einem Abstützrahmen durch ein Federelement federnd gelagert ist. Der Abstützrahmen ist wiederum gegenüber der Unterkante des Türflügels durch Einstellbefestigungsmittel vertikal einstellbar. Nachteilig bei einer solchen Ausbildung ist zum einen der hohe konstruktive Aufwand und zum andern die relativ geringe Dichtwirkung der beiden Dichtlippen. DE 20 2008 002 914 U1 offenbart eine Dichtungsvorrichtung für eine Fahrzeugtür, mit einem Portal, das eine Innenseite und eine Außenseite aufweist, und einem Türflügel, der eine Innenseite und eine Außenseite aufweist, wobei sich zwischen dem Portal und dem Türflügel im geschlossenen Zustand des Türflügels ein Spalt ausbildet und die Außenseite des Türflügels einen Vorsprung aufweist, der sich über den Spalt in Richtung des Portals erstreckt, wobei innerhalb des Spaltes am Portal ein Gegenlager angeordnet ist und sich zwischen dem Gegenlager und dem Vorsprung ein elastisches Dichtungselement befindet, dass im geschlossenen Zustand der Fahrzeugtür zusammengedrückt ist. Da das Gegenlager vertikal vorsteht eignet sich die Dichtungsvorrichtung jedoch nicht für eine Abdichtung gegenüber einer begehbaren Trittfläche.

Der vorliegenden Erfindung liegt demgegenüber die Aufgabe zugrunde, eine Schwenkschiebetürvorrichtung der eingangserwähnten Art derart weiter zu bilden, dass sie bei einfacher Ausbildung der Türdichtungsvorrichtung eine hohe Dichtwirkung gegenüber einer Trittfläche erreicht wird. Weiterhin soll auch ein Schienenfahrzeug mit einer solchen Schwenkschiebetürvorrichtung zur Verfügung gestellt werden.

Diese Aufgabe wird erfindungsgemäß durch die Merkmale der Ansprüche 1 und 22 gelöst. Vorteilhafte Weiterbildungen der Erfindung sind Gegenstand der beigefügten Unteransprüche.

### Offenbarung der Erfindung

Die Erfindung geht aus von einer Schwenkschiebetürvorrichtung zur Anordnung in einer zur Anordnung in einer Türöffnung eines Fahrzeugs, insbesondere eines Schienenfahrzeugs, mit
a) einem Türrahmen,
b) wenigstens einer Schwenkschiebetür, welche einen gegenüber dem Türrahmen beweglichen Türflügel aufweist, welcher derart am Türrahmen zwischen einer Türflügel-Schließposition und einer Türflügel-Öffnungsposition gelagert ist, dass die Bewegungsrichtung des Türflügels während eines Öffnungsvorgangs und während eines Schließvorgangs im Wesentlichen in der Horizontalen verläuft,
c) einer Türschwelle mit einer gegenüber der Horizontalen geneigt angeordneten Trittfläche für ein- und aussteigende Personen,
d) einer Türdichtungsvorrichtung mit einer passiven unteren Türdichtung, welche einen Spalt zwischen einer Unterkante des Türflügels und der Trittfläche abdichtet, wobei
e) die untere Türdichtung an der Unterkante oder im Bereich der Unterkante des Türflügels befestigt und in der Türflügel-Schließposition mit einem Dichtabschnitt gegen die geneigte Trittfläche dichtet.

Wie bereits eingangs erwähnt, öffnet und schließt sich bei einer solchen Schwenkschiebetüre der wenigstens eine Türflügel durch eine Kombination einer ersten Bewegungsrichtung mit einer zweiten Bewegungsrichtung, wobei die erste Bewegungsrichtung senkrecht zu einer Außenfläche des Fahrzeugs und die zweite Bewegungsrichtung parallel zur Außenfläche des Fahrzeugs ist.

Durch die gegenüber der Horizontalen geneigten Trittfläche der Türschwelle kann der Ein- und Ausstieg stufenlos und barrierefrei gestaltet werden.

### Gemäß der Erfindung ist vorgesehen, dass

f) der Dichtabschnitt wenigstens eine schlauchförmige, parallel zur Unterkante des Türflügels verlaufende erste Hohlkammer aufweist, welche in der Türflügel-Öffnungsposition einen ersten Querschnitt und in der Türflügel-Schließposition einen zweiten, gegenüber dem ersten Querschnitt verformten Querschnitt aufweist, und dass
g) bei der Schwenkschiebetür ein einziger Türflügel (einflügelige Schwenkschiebetürvorrichtung) oder zwei Türflügel (zweiflügelige Schwenkschiebetürvorrichtung) vorgesehen sind, wobei die zwei Türflügel zum Schließen der Türöffnung aufeinander zu und zum Freigeben der Türöffnung voneinander weglaufen.

Verformt bedeutet in diesem Zusammenhang einerseits, dass sich die Form des Querschnitts der Hohlkammer ändert und beispielsweise durch den Kontakt mit der Trittfläche der Türschwelle flacher wird. Beispielsweise findet beim Schließvorgang des Türflügels in die Türflügel-Schließposition senkrecht zur Trittfläche gesehen eine Kompression bzw. eine Verkleinerung und parallel zur Trittfläche gesehen eine Verlängerung des Querschnitts des Dichtabschnitts bzw. von dessen wenigstens einer ersten Hohlkammer statt. Weiterhin kann sich - muss aber nicht - auch das Volumen des Querschnitts der wenigstens einen ersten Hohlkammer infolge einer Kompression des Dichtabschnitts bzw. von dessen wenigstens einer ersten Hohlkammer ändern und insbesondere kleiner werden.

Die wenigstens eine erste Hohlkammer ist bevorzugt in sich geschlossen und kann evakuiert, mit Luft unter atmosphärischem Umgebungsdruck oder unter einem gegenüber dem atmosphärischen Umgebungsdruck niedrigeren Druck oder mit einem anderen elastischen Medium befüllt sein, beispielsweise mit einem Schaumstoff.

Die wenigstens eine erste Hohlkammer ist von einer im Querschnitt gesehen umlaufenden Wandung des Dichtabschnitts umgeben, welche ebenfalls aus einem elastischen Material besteht, insbesondere aus einem Elastomer.

Dadurch kann sich der Dichtabschnitt bestens elastisch verformen, wenn der Türflügel der Schwenkschiebetüre während eines Schließvorgangs im Wesentlichen in der Horizontalen verläuft und dadurch der Dichtabschnitt mit der gegenüber der Horizontalen geneigten Trittfläche in Kontakt tritt. Die in dem Dichtabschnitt ausgebildete wenigstens eine erste Hohlkammer bewirkt dann eine gute Schmiegung des Dichtabschnitts gegenüber der Trittfläche, was sich positiv auf die Dichtwirkung auswirkt. Weiterhin ergeben sich dann auch geringere Anforderungen an einzuhaltende Toleranzen zwischen dem Türflügel und der Trittfläche. Nicht zuletzt sorgt auch die gegenüber der Horizontalen geneigte, nach Art einer Rampe ausgebildete Trittfläche für eine weiter verbesserte Schmiegung des Dichtabschnitts gegenüber der Trittfläche, weil beim Schließvorgang dann der Dichtabschnitt gegen die rampenförmige Trittfläche entgegen deren Steigung aufläuft.

Durch die Unteransprüche sind vorteilhafte Weiterbildungen der in Anspruch 1 angegebenen Erfindung möglich.

Beispielsweise weist der Dichtabschnitt mehrere schlauchförmige, parallel zur Unterkante des Türflügels verlaufende erste Hohlkammern auf, welche insbesondere parallel zueinander angeordnet sind. Dabei kann beispielsweise eine zentrale Hohlkammer vorgesehen sein, welche an in Umfangsrichtung gesehen von weiteren Hohlkammern umgeben ist.

Besonders bevorzugt sind die Bewegung des Türflügels während des Schließvorgangs, die Neigung der Trittfläche gegenüber der Horizontalen und der Dichtabschnitt derart ausgeführt und aufeinander abgestimmt sind, dass ausgehend von der Türflügel-Öffnungsposition, in welcher der erste unverformte Querschnitt der ersten Hohlkammer vorliegt, sich am Ende eines ersten Abschnitts des Schließvorgangs des Türflügels der Dichtabschnitt an die Trittfläche mit einer Kontaktfläche anlegt, und dass während eines sich an den ersten Abschnitt zeitlich anschließenden zweiten Abschnitts des Schließvorgangs dann der Dichtabschnitt mit seiner Kontaktfläche an der Trittfläche im Wesentlichen haften bleibt und sich der Türflügel weiter in Richtung Tür-Schließposition bewegt, und wenn dann am Ende des zweiten Abschnitts des Schließvorgangs die Türflügel-Schließposition durch den Türflügel endgültig erreicht ist, dann die erste Hohlkammer den zweiten, verformten Querschnitt einnimmt. Dies bringt den Vorteil neben der oben bereits erwähnten guten Schmiegung mit sich, dass dann ein Verschleiß des Dichtabschnitts der unteren Türdichtung infolge von Gleitbewegungen gegenüber der Trittfläche stak reduziert bzw. vermieden wird.

Gemäß einer Weiterbildung wird ein Formschluss erzielt, wenn der Dichtabschnitt wenigstens im Bereich der Kontaktfläche eine nach außen ragende erste, quer zur Bewegung des Türflügels verlaufende Verzahnung aufweist, welche im Laufe des Schließvorgangs mit einer zweiten, quer zur Bewegung des Türflügels verlaufenden Verzahnung an der Trittfläche in Eingriff gerät. Im Laufe des Öffnungsvorgangs des Türflügels gerät dann die erste Verzahnung mit der zweiten Verzahnung wieder außer Eingriff, was durch die elastischen Eigenschaften des Dichtabschnitts ermöglicht wird.

Damit ergibt sich eine verbesserte Dichtwirkung, denn durch den Formschluss wird ein "Wegrutschen" des Dichtabschnitts von der Trittfläche verhindert. Durch die Verzahnung wird ein Abrollen des Dichtungsabschnitts auf der Trittfläche beim Schlie-ßen der Tür auch bei ungünstigen Reibungsverhältnissen (Reinigungsmittel, Verunreinigungen, etc.) sichergestellt.

Gemäß einer weiterbildenden Maßnahme weist die untere Türdichtung einen sich an den Dichtabschnitt insbesondere vertikal anschließenden Stegabschnitt insbesondere aus Vollmaterial auf, welcher wiederum insbesondere vertikal in einen Halteabschnitt übergeht, welcher an der Unterkante des Türflügels insbesondere lösbar befestigt ist.

Dabei kann an der Unterkante des Türflügels eine Stützvorrichtung derart angeordnet sein, dass zumindest der Stegabschnitt während des Schließvorgangs in einer Gegenrichtung in Bezug zur Bewegungsrichtung des Türflügels abgestützt ist. Dass beim Schließvorgang dann der Stegabschnitt an der Stützvorrichtung abgestützt ist, sorgt dafür, dass sich der Stegabschnitt dann infolge der Einfahrbewegung des Türflügels nicht mehr verformen kann, aber sich dann der Dichtabschnitt mit der ersten Hohlkammer maximal verformen kann, um eine weiter verbesserte Schmiegung und Dichtwirkung zu erzielen.

In besonders zu bevorzugender Weise sind der Dichtabschnitt, der Stegabschnitt und der Halteabschnitt der unteren Türdichtung einstückig aus einem Elastomer-Material ausgebildet und bildet damit beispielsweise ein Extrusionsprofil, insbesondere als ablängbare Meterware.

Der Halteabschnitt ist dann beispielsweise in einer nutartigen Ausnehmung an der Unterkante des Türfügels formschlüssig aufgenommen, wobei die nutartige Ausnehmung einen hinterschnittenen Querschnitt aufweist, in welchen der Halteabschnitt formschlüssig eingreift. Dieser formschlüssige Eingriff des Halteabschnitts in die nutartige Ausnehmung kann beispielsweise dadurch erreicht werden, dass der Halteabschnitt unter elastischer Verformung in die nutartige Ausnehmung eingepresst wird und sich dann aufgrund seiner Elastizität in der montierten Endstellung wieder innerhalb der nutartigen Ausnehmung aufweitet, wobei dann der hinterschnittene Querschnitt für den Formschluss sorgt. Eine separate Befestigungseinrichtung ist dann nicht erforderlich. Vielmehr werden für die Befestigung die elastischen Eigenschaften des Halteabschnitts genutzt.

Gemäß einer Weiterbildung weist der Halteabschnitt eine zweite schlauchartige Hohlkammer auf. Diese zweite Hohlkammer erhöht dann die Elastizität des Halteabschnitts der unteren Türdichtung und erleichtert somit die oben beschriebene Montage. Die zweite Hohlkammer verläuft insbesondere parallel zur Unterkante des Türflügels.

Die Trittfläche der Türschwelle weist gegenüber der Horizontalen bevorzugt einen ersten Winkel α in einem Bereich von 10 Grad bis 15 Grad, weiter bevorzugt etwa 14 Grad auf.

Gemäß einer Weiterbildung kann eine Schiebetrittanordnung zur Überbrückung eines Spalts zwischen der Türschwelle und einem in Bezug auf das Fahrzeug externen begehbaren Bereich vorgesehen sein, welche einen zwischen einer eingefahrenen Schiebetritt-Ausgangsposition und einer ausgefahrenen Schiebetritt-Endposition linear antreibbaren Schiebetritt umfasst, wobei der Schiebetritt unterhalb der Türschwelle ein- und ausschiebbar geführt oder gelagert ist.

Beispielsweise werden solche Schiebetrittanordnungen bei Fahrzeugen zur Personenbeförderung eingesetzt, um den Zu- und Ausstieg zu erleichtern und um eine Gefährdung von Personen zu vermeiden. Dabei kann der Schiebetritt mit Hilfe eines Antriebs zwischen der eingefahrenen Schiebetritt-Ausgangsposition (Ruhestellung) und der ausgefahrenen Schiebetritt-Endposition (Arbeitsstellung) hin- und her bewegt werden und ist hierzu beispielsweise an zwei parallel zueinander angeordneten Schienen einer Führungseinrichtung geführt. Üblicherweise geschieht die Führung des Schiebetritts über Rollen.

Beispielsweise bei einem Schienenfahrzeug dient der Schiebetritt der Schiebetrittanordnung zur Überbrückung des Spalts zwischen dem Schienenfahrzeug und einem Bahnsteig, wenn das Schienenfahrzeug in einem Bahnhof hält. Damit wird verhindert, dass Passagiere in den betreffenden Spalt hineintreten. Auch kann der Schiebetritt bei Omnibussen dazu dienen, den Spalt zwischen Fahrzeug und einer Bordsteinkante abzudecken. Der Schiebetritt kann auch dazu dienen, einen Niveauunterschied zwischen einer Plattform des Fahrzeugs und dem Bahnsteig oder Gehsteig zu überbrücken, um einen Zu- und Ausstieg mit Rollstühlen und Kinderwagen zu erleichtern. Nicht zuletzt kann eine solche Schiebetrittanordnung auch bei Fahrzeugen zur Beförderung von kranken oder behinderten Personen eingesetzt werden, etwa, um durch den ausgefahrenen Schiebetritt einen Fahrweg für eine fahrbare Krankentrage oder einen Rollstuhl zwischen einer Fahrzeugplattform und einer Straße oder einem Gehweg zu bilden. Der Schiebetritt bildet daher in der ausgefahrenen Schiebetritt-Endposition eine begehbare Fläche zwischen Fahrzeug und Bahnsteig und dient als Einstiegshilfe für Personen beim Betreten bzw. Verlassen des Fahrzeugs.

Beispielsweise wird der Schiebetritt mit Hilfe einer Schiebetritt-Antriebseinrichtung zwischen der eingefahrenen Schiebetritt-Ausgangsposition (Ruhestellung) und der vollständig ausgefahrenen ausgefahrenen Schiebetritt-Endposition (Arbeitsstellung) hin- und her bewegt, kann aber auch an einer beliebigen Zwischenposition gestoppt und gehalten werden.

Der Schiebetritt kann insbesondere in einer Schiebetrittkassette oder einem Schiebetrittgestell verschiebbar geführt sein, wobei dann die Schiebetrittkassette oder das Schiebetrittgestell in Gebrauchslage unterhalb der Türschwelle angeordnet ist.

In Kombination mit der Schiebetrittanordnung kann eine Abstreifereinrichtung vorgesehen sein, welche eine an einem freien Ende der Trittfläche um eine horizontale Achse schwenkbare Klappe aufweist, welche dazu ausgebildet und vorgesehen ist, um zum Abstreifen von Schmutz und Bilden einer Rampe auf dem Schiebetritt in der Schiebetritt-Ausgangsposition, in der Schiebetritt-Endposition wie auch in Schiebetritt-Zwischenpositionen zwischen der Schiebetritt-Ausgangsposition und der Schiebetritt-Endposition aufzuliegen. Die Klappe bildet dann insbesondere eine Verlängerung der Trittfläche bzw. der Türschwelle. Weiterhin geht beispielsweise die Trittfläche der Türschwelle stufenlos in eine in Gebrauchslage obere Fläche der Klappe über, was einen weiterhin stufenlosen und barrierefreien Ein- und Ausstieg mit sich bringt.

Die Klappe kann insbesondere ausgebildet sein, um einen Spalt zwischen einer in Gebrauchslage unteren Fläche der Türschwelle und einer in Gebrauchslage oberen Fläche des Schiebetritts abzudichten.

In "Gebrauchslage oben bzw. unten" bedeutet die Ausrichtung der betreffenden Fläche oder Komponente in Bezug zur Vertikalen im Gebrauchszustand oder im montierten Zustand der Schwenkschiebetürvorrichtung.

Besonders bevorzugt weist die Klappe gegenüber der oberen Fläche des Schiebetritts einen zweiten Winkel β in einem Bereich von 20 Grad bis 40 Grad auf.

Zur schwenkbaren Lagerung der Klappe gegenüber der Türschwelle kann eine Gelenkverbindung zwischen der Klappe und dem freien Ende der Türschwelle vorgesehen sein. Diese Gelenkverbindung kann Vorspannmittel enthalten, durch welche die Klappe gegen die in Gebrauchslage obere Fläche des Schiebetritts vorgespannt wird.

Gemäß einer besonders zu bevorzugenden Maßnahme steht die Klappe in der Türflügel-Schließposition unter dem Dichtabschnitt der unteren Türdichtung vor und kontaktiert den Dichtabschnitt nicht. Dadurch wird verhindert, dass ansonsten die Ausfahrbewegung des Schiebetritts durch den Dichtabschnitt behindert werden würde.

Gemäß einer Weiterbildung bildet die untere Türdichtung einen unteren Abschnitt einer umlaufenden Türdichtung der Türdichtungsvorrichtung, welche an dem Umfang des Türflügels umlaufend ausgebildet ist.

Nicht zuletzt kann die untere Türdichtung einstückig mit wenigstens einer seitlichen Türdichtung ausgeführt sein, welche ebenfalls am Türflügel befestigt ist, wobei die untere Türdichtung in die wenigstens eine seitliche Türdichtung in einem gebogenen Abschnitt kontinuierlich übergeht.

Weiterhin kann die untere Türdichtung an der Unterkante oder im Bereich der Unterkante des Türflügels durch eine Einstellvorrichtung derart befestigt sein, dass eine vertikale Lage der unteren Türdichtung in Bezug auf die Unterkante des Türflügels einstellbar ist.

Alternativ hierzu kann die untere Türdichtung an der Unterkante oder im Bereich der Unterkante des Türflügels derart befestigt sein, dass eine vertikale Lage der unteren Türdichtung in Bezug auf die Unterkante des Türflügels festgelegt ist. Die untere Türdichtung ist dann nicht einstellbar.

Die Erfindung betrifft auch ein Schienenfahrzeug mit wenigstens einer oben beschriebenen Schwenkschiebetürvorrichtung. Der bevorzugte Einsatz der erfindungsgemäßen Schwenkschiebetürvorrichtung ist daher in einem Schienenfahrzeug, worunter ein spurgebundenes Fahrzeug zu verstehen ist, wie etwa eine Lokomotive, ein Triebzug, ein Triebwagen, eine Straßenbahn, ein U-Bahnfahrzeug, ein Waggon wie ein Personen- bzw. Reisezug und/oder Güterwagen, insbesondere ein Hochgeschwindigkeits-Schienenfahrzeug. Alternativ könnte die erfindungsgemäße Schwenkschiebetürvorrichtung natürlich auch in einem straßengebundenen Fahrzeug eingesetzt werden, beispielsweise in einem Omnibus.

### Zeichnung

Die Erfindung wird nachstehend anhand von Ausführungsbeispielen unter Bezugnahme auf die beigefügte Zeichnung näher beschrieben. Es zeigen:
- Fig.1: eine schematische Darstellung eines Schienenfahrzeugs mit einem bevorzugten Ausführungsbeispiel einer Schwenkschiebetürvorrichtung der vorliegenden Erfindung mit einer bevorzugten Ausführungsform einer unteren Türdichtung;
- Fig.2: eine Querschnittsdarstellung der Schwenkschiebetürvorrichtung von Fig.1 mit einem Türflügel und einem Schiebetritt in jeweils eingefahrener Stellung;
- Fig.3: eine Querschnittsdarstellung der Schwenkschiebetürvorrichtung von Fig.1 mit dem Türflügel und dem Schiebetritt in ausgefahrener Stellung;
- Fig.4: eine Querschnittsdarstellung einer unteren Türdichtung gemäß einer weiteren Ausführungsform;
- Fig.5: eine Querschnittsdarstellung einer Schwenkschiebetürvorrichtung gemäß einer weiteren Ausführungsform, mit einer unteren Türdichtung gemäß Fig. 4 und mit dem Türflügel und dem Schiebetritt in ausgefahrener Stellung.

### Beschreibung der Ausführungsbeispiele

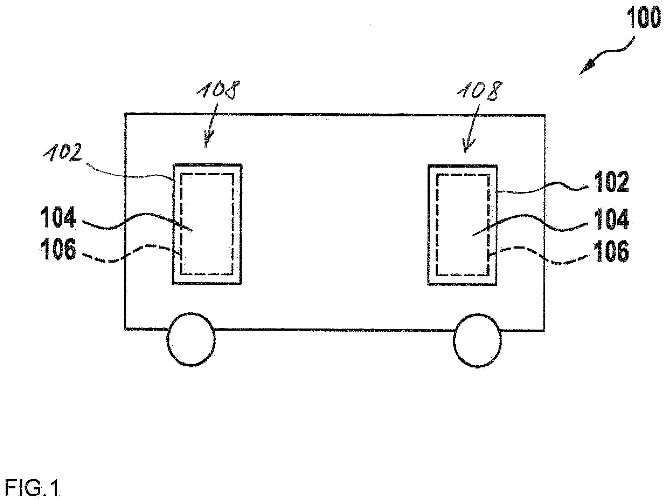

**Fig.** 1 zeigt eine schematische Darstellung eines Schienenfahrzeugs 100 gemäß einem Ausführungsbeispiel der vorliegenden Erfindung. Das Schienenfahrzeug 100 weist beispielhaft zwei Schwenkschiebetürvorrichtungen 108 mit je einem Türrahmen 102 und je einem Schwenkschiebe-Türflügel 104, kurz Türflügel 104 auf. Jeder der Türflügel 104 weist eine Türdichtungsvorrichtung 106 auf, die in **Fig. 1** aufgrund ihrer Positionen an den Außenkanten der Türflügel 104 nur gestrichelt angedeutet sind. Die Türdichtungsvorrichtungen 106 sind ausgebildet, um einen sich bei geschlossenen Türen zwischen den Türflügeln 104 und dem Türrahmen 102 befindlichen Spalt abzudichten. Dazu sind die Türdichtungsvorrichtungen 106 entlang einem im geschlossenen Zustand der Türen bestehenden Überlappungsbereich zwischen den Türflügeln 104 und den Türrahmen 102 angeordnet. Die Türdichtungsvorrichtungen 106 können entlang einer oder mehrerer Kanten der Türflügel 104 angeordnet sein. In **Fig.1** sind die Türdichtungsvorrichtungen 106 lediglich beispielhaft umlaufend, entlang der Oberkanten, der Unterkanten und der Seitenkanten der Türflügel 104 angeordnet. Die Schwenkschiebetürvorrichtungen 108 sind hier beispielsweise einflügelige Schwenkschiebetürvorrichtungen mit jeweils nur einem Schwenkschiebe-Türflügel 104. Selbstverständlich können auch zweiflügelige Schwenkschiebetürvorrichtungen 108 mit jeweils zwei gegenläufig öffnenden und schließenden Türflügeln vorgesehen sein.

Wenn die Türdichtungsvorrichtungen 106 aus mehreren Einzelabschnitten zusammengesetzt sind, beispielsweise aus geradlinigen Abschnitten und Eckabschnitten, können die Türdichtungsvorrichtungen 106 auch als Türdichtungssysteme bezeichnet werden.

Die Schwenkschiebetürvorrichtungen 108 weisen Schwenkschiebetüren auf, welche hier beispielsweise jeweils einen gegenüber dem zugeordneten Türrahmen 102 beweglichen Schwenkschiebe-Türflügel 104 aufweisen, kurz Türflügel 104, welcher derart am Türrahmen 102 zwischen einer Türflügel-Schließposition und einer Türflügel-Öffnungsposition gelagert ist, dass die Bewegungsrichtung des Türflügels 104 während eines Öffnungsvorgangs und während eines Schließvorgangs der Schwenkschiebetüre im Wesentlichen in der Horizontalen bzw. in einer horizontalen Ebene verläuft. Auch ist eine Schwenkachse der Türflügel 104 bevorzugt vertikal.

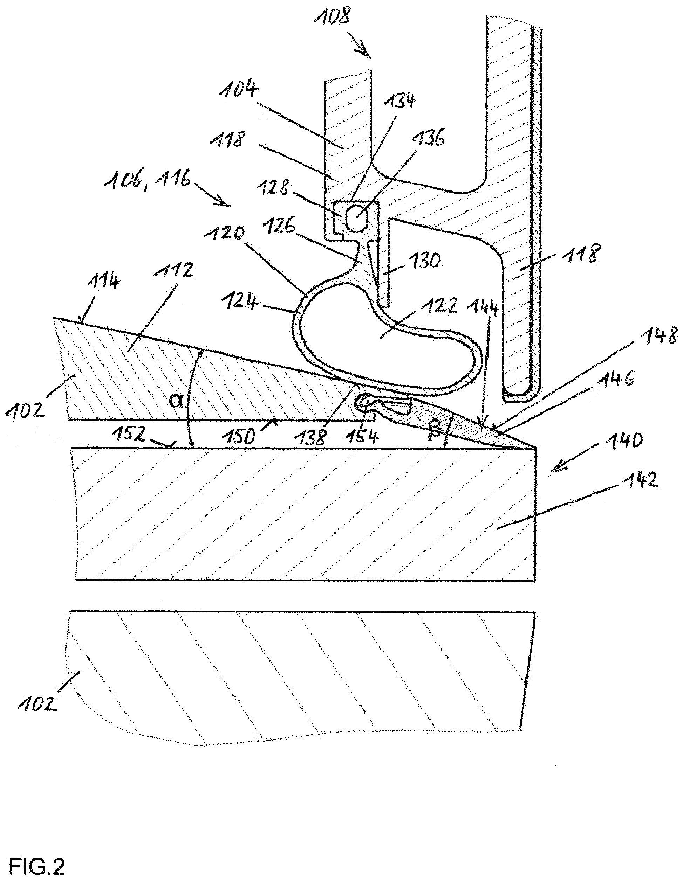

**Fig. 2** zeigt eine Querschnittsdarstellung einer Schwenkschiebetürvorrichtung 108 mit einer Türdichtungsvorrichtung 106 gemäß einem Ausführungsbeispiel der vorliegenden Erfindung. Die Türdichtungsvorrichtung 106 ist hier beispielsweise in Form eines bevorzugt um eine Umlaufkante des Türflügels 104 umlaufenden Dichtungsprofils ausgeführt.

Erkennbar in **Fig. 2** ist auch eine Türschwelle 112, welche einen unteren Teil des Türrahmens 102 darstellt, mit einer gegenüber der Horizontalen bzw. der horizontalen Ebene geneigt angeordneten Trittfläche 114 für ein- und aussteigende Personen. Die Türdichtungsvorrichtung 106 ist hier eine passive Türdichtungsvorrichtung, d.h. sie dichtet bereits durch ihre Ausgangskonfiguration, ohne dass etwa in der Türflügel-Schließposition eine dann einsetzende Belüftung von inneren Kammern zum Dichten notwendig wäre. Erkennbar in **Fig. 2** ist außerdem eine untere Türdichtung 116 der Türdichtungsvorrichtung 106, welche einen Spalt zwischen einer Unterkante 118 des Türflügels 104 und der Trittfläche 114 abdichtet.

Die untere Türdichtung 116 ist an der Unterkante 118 oder im Bereich der Unterkante 118 des Türflügels 104 befestigt und dichtet in der in **Fig. 2** gezeigten Türflügel-Schließposition mit einem Dichtabschnitt 120 gegen die geneigte Trittfläche 114. Die Trittfläche 114 der Türschwelle 112 weist gegenüber der Horizontalen bzw. gegenüber der horizontalen Ebene bevorzugt einen ersten Winkel α in einem Bereich von 10 Grad bis 15 Grad, weiter bevorzugt etwa 14 Grad auf.

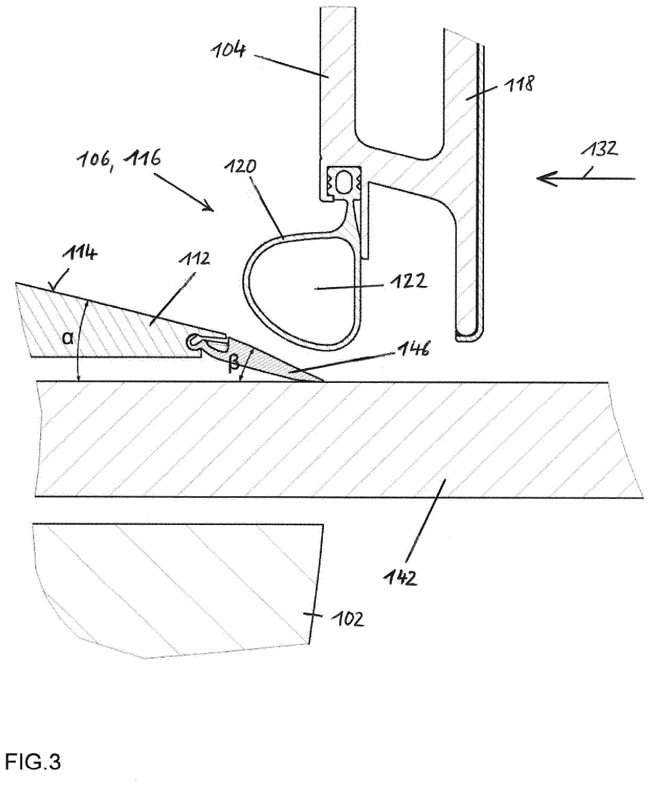

Der Dichtabschnitt 120 weist eine schlauchförmige, parallel zur Unterkante 118 des Türflügels 104 verlaufende erste Hohlkammer 122 auf, welche in der Türflügel-Öffnungsposition einen ersten unverformten Querschnitt **(****Fig. 3****)** und in der Türflügel-Schließposition einen zweiten, gegenüber dem ersten Querschnitt verformten Querschnitt aufweist, wie **Fig. 2** zeigt.

Die erste Hohlkammer 122 ist von einer Wandung 124 des Dichtabschnitts 120 umgeben, welche hier beispielsweise relativ dünn ausgeführt ist. Die erste Hohlkammer 122 ist bevorzugt in sich geschlossen und kann evakuiert, mit Luft unter atmosphärischem Umgebungsdruck oder unter einem gegenüber dem atmosphärischen Umgebungsdruck niedrigeren oder höheren Druck oder mit einem anderen elastischen Medium als Luft befüllt sein, beispielsweise mit einem Schaumstoff.

Die erste Hohlkammer 122 ist weiterhin bezogen auf ihre Längserstreckung schlauchförmig und flexibel ausgeführt und kann bei ihrer Anordnung zwischen dem Türflügel 104 und dem Türrahmen 102 bei einer Schließbewegung des Türflügels 104 zusammengepresst werden, um einen sich zwischen Türflügel 104 und Türrahmen 102 bzw. Trittfläche 114 befindlichen Spalt abzudichten. Eine Längserstreckungsrichtung des Dichtabschnitts 120 mit der ersten Hohlkammer 122 ist gemäß diesem Ausführungsbeispiel geradlinig, so dass der Dichtabschnitt 120 mit der ersten Hohlkammer 122 der unteren Türdichtung 116 beispielsweise entlang der geradlinigen Unterkante 118 des Türflügels 104 angeordnet ist.

Bevorzugt weist wenigstens die untere Türdichtung 116 der Türdichtungsvorrichtung 106 einen sich an den Dichtabschnitt 120 insbesondere vertikal anschließenden Stegabschnitt 126 insbesondere aus Vollmaterial auf, welcher wiederum insbesondere vertikal in einen Halteabschnitt 128 übergeht, welcher an der Unterkante 118 des Türflügels 104 insbesondere lösbar befestigt ist. Der Stegabschnitt 126 ist dabei gegenüber dem Halteabschnitt 128 und dem Dichtabschnitt 120, welchen er vertikal zwischengeordnet ist, dünner ausgeführt. In besonders zu bevorzugender Weise sind der Dichtabschnitt 120, der Stegabschnitt 126 und der Halteabschnitt 128 wenigstens der unteren Türdichtung 116 einstückig aus einem Elastomer-Material ausgebildet und bildet damit beispielsweise einen einstückigen Spritzgussformling.

Der Halteabschnitt 128 ist dann beispielsweise in einer nutartigen Ausnehmung 134 an der Unterkante 118 des Türfügels 104 formschlüssig aufgenommen, wobei die nutartige Ausnehmung 134 einen hinterschnittenen Querschnitt aufweist, in welchen der Halteabschnitt 128 formschlüssig eingreift. Der formschlüssige Eingriff des Halteabschnitts 128 in die nutartige Ausnehmung 134 kann beispielsweise dadurch hervorgerufen werden, dass der Halteabschnitt 128 unter elastischer Verformung in die nutartige Ausnehmung 134 eingepresst wird und sich dann aufgrund seiner Elastizität in der montierten Endstellung wieder innerhalb der nutartigen Ausnehmung 134 aufweitet, wobei dann der hinterschnittene Querschnitt für den Formschluss sorgt.

Der Halteabschnitt 128 weist beispielsweise eine zweite schlauchartige Hohlkammer 136 auf. Diese zweite Hohlkammer 136 erhöht dann die Elastizität des Halteabschnitts 128 der unteren Türdichtung 116 und erleichtert somit die oben beschriebene Montage. Die zweite Hohlkammer 136 verläuft beispielsweise geradlinig parallel zur Unterkante 118 des Türflügels 104.

Wie durch einen Vergleich der Form des Dichtabschnitts 120 in **Fig. 2** mit der Form des Dichtabschnitts 120 in **Fig. 3** hervorgeht, weist die erste Hohlkammer 122 beim Schließvorgang in einer Position gemäß **Fig. 3****,** in welcher die Türflügel-Schließposition noch nicht erreicht ist und in welcher der Dichtabschnitt 120 die Trittfläche 114 noch nicht kontaktiert, einen unverformten ersten Querschnitt auf. Dieser erste unverformte Querschnitt der ersten Hohlkammer 122 liegt auch in der Türflügel-Öffnungsposition vor, wie leicht vorstellbar ist.

Demgegenüber weist die erste Hohlkammer 122 in der in gemäß **Fig. 2** gezeigten Türflügel-Schließposition einen zweiten, gegenüber dem ersten Querschnitt verformten Querschnitt auf. Der unverformte erste Querschnitt ist beinahe kreisförmig, während der durch den Kontakt mit der Trittfläche 114 verformte zweite Querschnitt beinahe elliptisch ist. Insgesamt findet daher beim Erreichen der Türflügel-Schließposition senkrecht zur Trittfläche 114 gesehen eine Kompression und parallel zur Trittfläche 114 gesehen eine Längung des Querschnitts des Dichtabschnitts 120 bzw. von dessen erster Hohlkammer 122 statt. Die Verformung des Querschnitts des Dichtabschnitts 120 bzw. von dessen erster Hohlkammer 122 bedingt eine gute Schmiegung der unteren Türdichtung 116 gegenüber der Trittfläche 114, was wiederum in einer guten Dichtwirkung resultiert.

Besonders bevorzugt sind die Bewegung des Türflügels 104 während des Schließvorgangs in die Türflügel-Schließposition, die Neigung (erster Winkel a) der Trittfläche 114 gegenüber der Horizontalen und der Dichtabschnitt 120 und insbesondere der Reibkoeffizient einer Kontaktfläche 138 des Dichtabschnitts 120 mit der Trittfläche 114 derart ausgeführt bzw. ausgebildet bzw. aufeinander abgestimmt, dass ausgehend von der Türflügel-Öffnungsposition, in welcher der erste unverformte Querschnitt der ersten Hohlkammer 122 vorliegt, sich am Ende eines ersten Abschnitts des Schließvorgangs des Türflügels 104 der Dichtabschnitt 120 an die Trittfläche 114 mit seiner Kontaktfläche 138 anlegt, wodurch sich der Querschnitt der ersten Hohlkammer 122 bereits etwas verformt. Während eines sich an den ersten Abschnitt zeitlich anschließenden zweiten Abschnitts des Schließvorgangs bleibt dann der Dichtabschnitt 120 mit seiner Kontaktfläche 138 an der Trittfläche 114 im Wesentlichen haften, wobei sich aber das Türblatt 104 weiter in Richtung Tür-Schließposition bewegt, was eine weitere Verformung des Querschnitts der ersten Hohlkammer 122 bedingt. Ist dann am Ende des zweiten Abschnitts des Schließvorgangs die Türflügel-Schließposition **(****Fig.2****)** durch den Türflügel 104 endgültig erreicht, dann nimmt die erste Hohlkammer 122 den zweiten, verformten Querschnitt ein.

An der Unterkante 118 des Türflügels 104 ist hier beispielsweise eine Stützvorrichtung 130, hier beispielsweise in Form einer von der Unterkante 118 nach unten ragenden Rippe derart angeordnet, dass beispielsweise der Stegabschnitt 126 während des Schließvorgangs des Türflügels 104 in einer Gegenrichtung in Bezug zur Bewegungsrichtung 132 des Türflügels 104 abgestützt ist, wobei die Bewegungsrichtung 132 des Türflügels 104 während des Schließvorgangs in **Fig. 3** durch einen Pfeil symbolisiert wird. Die Abstützung des Stegabschnitts 126 an der Stützvorrichtung 130 sorgt dann dafür, dass sich der Stegabschnitt 126 infolge der Einfahrbewegung des Türflügels 104 nicht verformen kann, aber sich dann der Dichtabschnitt 120 mit der ersten Hohlkammer 122 maximal verformt, um eine weiter verbesserte Schmiegung und Dichtwirkung zwischen dem Dichtabschnitt 120 und der Trittfläche 114 zu erzielen.

Beispielsweise kann die Schwenkschiebetürvorrichtung 108 eine Schiebetrittanordnung 140 zur Überbrückung eines Spalts zwischen der Türschwelle 112 und einem in Bezug auf das Schienenfahrzeug 100 externen Bahnsteig vorgesehen sein, welche einen zwischen einer eingefahrenen Schiebetritt-Ausgangsposition und einer ausgefahrenen Schiebetritt-Endposition linear antreibbaren Schiebetritt 142 umfasst, wobei der Schiebetritt 142 dann beispielsweise unterhalb der Türschwelle 112 ein- und ausschiebbar geführt oder gelagert ist.

Der Schiebetritt 142 kann insbesondere in einer hier nicht gezeigten Schiebetrittkassette oder einem Schiebetrittgestell verschiebbar geführt sein, wobei dann die Schiebetrittkassette oder das Schiebetrittgestell in Gebrauchslage unterhalb der Türschwelle 112 angeordnet ist.

In Kombination mit der Schiebetrittanordnung 140 ist hier eine Abstreifereinrichtung 144 vorgesehen, welche eine an einem freien Ende der Trittfläche 114 um eine horizontale Achse schwenkbare Klappe 146 aufweist, welche dazu ausgebildet und vorgesehen ist, um zum Abstreifen von Schmutz und Bilden einer Rampe auf dem Schiebetritt 142 in der Schiebetritt-Ausgangsposition, in der Schiebetritt-Endposition wie auch in Schiebetritt-Zwischenpositionen zwischen der Schiebetritt-Ausgangsposition und der Schiebetritt-Endposition aufzuliegen. Die Klappe 146 bildet dann insbesondere eine Verlängerung der Trittfläche 114 bzw. der Türschwelle 112. Weiterhin geht die Trittfläche 114 der Türschwelle 112 beispielsweise stufenlos in eine in Gebrauchslage obere Fläche 148 der Klappe 146 über.

Die Klappe 146 kann insbesondere ausgebildet sein, um einen Spalt zwischen einer in Gebrauchslage unteren Fläche 150 der Türschwelle 112 und einer in Gebrauchslage oberen Fläche 152 des Schiebetritts 142 abzudichten.

Besonders bevorzugt weist die Klappe 146 gegenüber der oberen Fläche 152 des Schiebetritts 142 einen zweiten Winkel β in einem Bereich von 20 Grad bis 40 Grad auf.

Zur schwenkbaren Lagerung der Klappe 146 gegenüber der Türschwelle 112 ist hier beispielsweise eine Gelenkverbindung 154 zwischen der Klappe 146 und dem freien Ende der Türschwelle 112 vorgesehen sein. Diese Gelenkverbindung 154 kann Vorspannmittel enthalten, durch welche die Klappe 146 gegen die in Gebrauchslage obere Fläche 152 des Schiebetritts 142 vorgespannt wird.

Besonders bevorzugt steht die Klappe 146 in der Türflügel-Schließposition unter dem Dichtabschnitt 120 der unteren Türdichtung 116 vor und kontaktiert den Dichtabschnitt 120 nicht. Dadurch wird verhindert, dass die Ausfahrbewegung des Schiebetritts 142 durch den Dichtabschnitt 120 behindert wird.

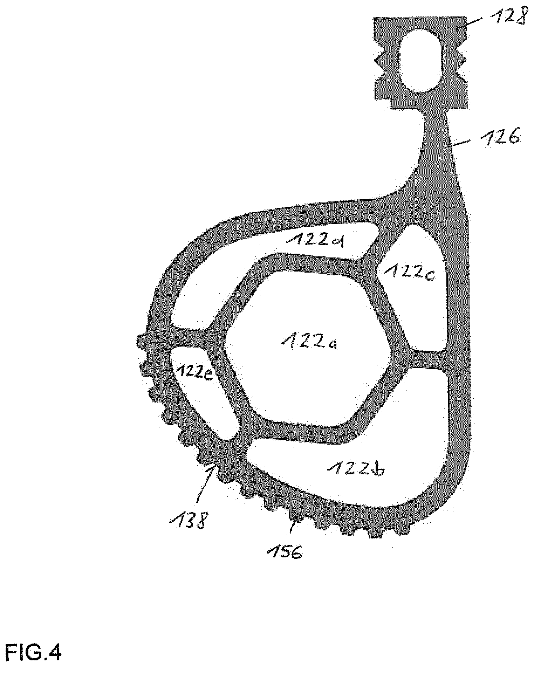

Gemäß einer in **Fig. 4** dargestellten weiteren Ausführungsform einer unteren Türdichtung 116 weist der Dichtabschnitt 120 mehrere schlauchförmige, parallel zur Unterkante 118 des Türflügels 104 verlaufende erste Hohlkammern 122a bis 122e auf. Diese Hohlkammern 122a bis 122e sind insbesondere parallel zueinander angeordnet. Bevorzugt ist dabei eine zentrale Hohlkammer 122a vorgesehen, welche an in Umfangsrichtung gesehen von weiteren Hohlkammern 122b bis 122e sattelitenartig umgeben ist.

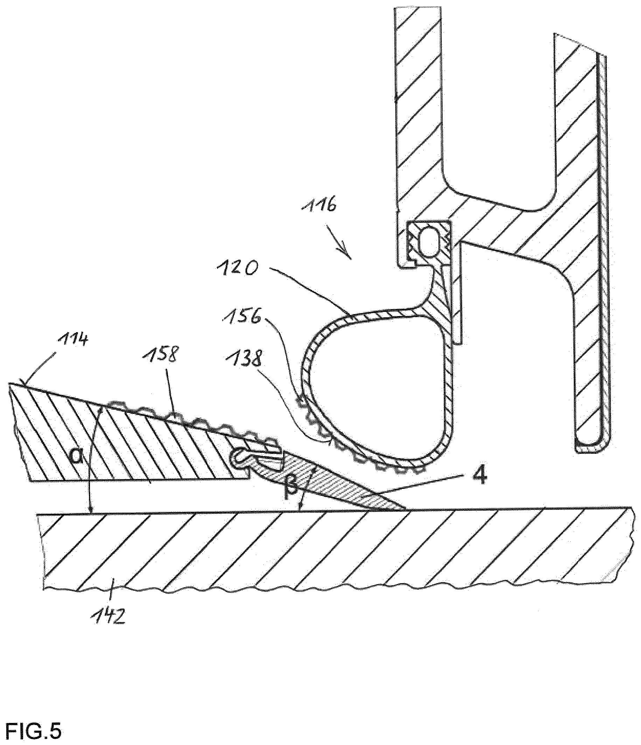

**Fig. 5** ist eine Querschnittsdarstellung einer Schwenkschiebetürvorrichtung 108 gemäß einer weiteren Ausführungsform mit einer unteren Türdichtung 116 gemäß **Fig. 2** und **Fig. 3****,** wobei der Türflügel 104 und der Schiebetritt 142 sich in ausgefahrener Stellung befinden. Hier weist der Dichtabschnitt 120 wenigstens im Bereich der Kontaktfläche 138 eine nach außen ragende erste, quer zur Bewegung des Türflügels 104 verlaufende Verzahnung 156 aufweist, welche im Laufe des Schließvorgangs mit einer zweiten, quer zur Bewegung des Türflügels 104 verlaufenden Verzahnung 158 an der Trittfläche 114 in Eingriff gerät. Beim Öffnen des Türflügels gerät dann die erste Verzahnung 156 wiederum mit der zweiten Verzahnung 158 außer Eingriff. Das In-Eingriffgeraten und das Außer-Eingriffgeraten wird durch die elastischen Eigenschaften des Dichtabschnitts 120 ermöglicht.

Wie leicht vorstellbar ist, kann die untere Türdichtung 116 einstückig mit beispielsweise zwei am Türflügel 104 befestigten seitlichen Türdichtungen beispielsweise als Meterware ausgeführt sein und in diese seitlichen Türdichtungen in beispielsweise gebogenen Abschnitten kontinuierlich übergehen.

Auch kann die untere Türdichtung 116 an der Unterkante 118 oder im Bereich der Unterkante 118 des Türflügels 104 durch eine hier nicht gezeigte Einstellvorrichtung derart befestigt sein, dass eine vertikale Lage der unteren Türdichtung 166 in Bezug auf die Unterkante 118 des Türflügels 104 einstellbar ist.

Im Rahmen der Erfindung sind auch Ausführungen enthalten, welche beliebige Kombination von hier beschriebenen Merkmalen enthalten, die innerhalb des Schutzumfangs der Ansprüche sind.

### Bezugszeichenliste

- 100: Schienenfahrzeug
- 102: Türrahmen
- 104: Türflügel
- 106: Türdichtungsvorrichtung
- 108: Schwenkschiebetürvorrichtung
- 112: Türschwelle
- 114: Trittfläche
- 116: untere Türdichtung
- 118: Unterkante
- 120: Dichtabschnitt
- 122, 122a-122e: erste Hohlkammern
- 124: Wandung
- 126: Stegabschnitt
- 128: Halteabschnitt
- 130: Stützvorrichtung
- 132: Bewegungsrichtung Schließvorgang
- 134: Ausnehmung
- 136: zweite Hohlkammer
- 138: Kontaktfläche
- 140: Schiebetrittanordnung
- 142: Schiebetritt
- 144: Abstreifereinrichtung
- 146: Klappe
- 148: obere Fläche
- 150: untere Fläche
- 152: obere Fläche
- 154: Gelenkverbindung
- 156: erste Verzahnung
- 158: zweite Verzahnung

## Patentansprüche

1. Schwenkschiebetürvorrichtung (108) zur Anordnung in einer Türöffnung eines Fahrzeugs (100), mit
a) einem Türrahmen (102),
b) wenigstens einer Schwenkschiebetür, welche einen gegenüber dem Türrahmen beweglichen Türflügel (104) aufweist, welcher derart am Türrahmen (102) zwischen einer Türflügel-Schließposition und einer Türflügel-Öffnungsposition gelagert ist, dass die Bewegungsrichtung des Türflügels (104) während eines Öffnungsvorgangs und während eines Schließvorgangs im Wesentlichen in der Horizontalen verläuft,
c) einer Türschwelle (112) des Türrahmens (102) mit einer gegenüber der Horizontalen geneigt angeordneten Trittfläche (114) für ein- und aussteigende Personen,
d) einer Türdichtungsvorrichtung (106) mit einer passiven unteren Türdichtung (116), welche einen Spalt zwischen einer Unterkante (118) des Türflügels (104) und der Trittfläche (114) abdichtet, wobei
e) die untere Türdichtung (116) an der Unterkante (118) oder im Bereich der Unterkante (118) des Türflügels (104) befestigt und in der Türflügel-Schließposition mit einem Dichtabschnitt (120) gegen die geneigte Trittfläche (114) dichtet, **dadurch gekennzeichnet, dass**
f) der Dichtabschnitt (120) wenigstens eine schlauchförmige, parallel zur Unterkante (118) des Türflügels (104) verlaufende erste Hohlkammer (122; 122a-122e) aufweist, welche in der Türflügel-Öffnungsposition einen ersten unverformten Querschnitt und in der Türflügel-Schließposition einen zweiten, gegenüber dem ersten Querschnitt verformten Querschnitt aufweist, und dass
g) bei der Schwenkschiebetür ein einziger Türflügel (104) oder zwei Türflügel vorgesehen sind, wobei die zwei Türflügel zum Schließen der Türöffnung aufeinander zu und zum Freigeben der Türöffnung voneinander weglaufen.

2. Schwenkschiebetürvorrichtung nach Anspruch 1, **dadurch gekennzeichnet, dass** die Bewegung (132) des Türflügels (104) während des Schließvorgangs, die Neigung der Trittfläche (114) gegenüber der Horizontalen und der Dichtabschnitt (120) derart ausgeführt und aufeinander abgestimmt sind, dass ausgehend von der Türflügel-Öffnungsposition, in welcher der erste unverformte Querschnitt der wenigstens einen ersten Hohlkammer (122; 122a-122e) vorliegt, sich am Ende eines ersten Abschnitts des Schließvorgangs des Türflügels (104) der Dichtabschnitt (120) an die Trittfläche (114) mit einer Kontaktfläche (138) anlegt, und dass während eines sich an den ersten Abschnitt zeitlich anschließenden zweiten Abschnitts des Schließvorgangs dann der Dichtabschnitt (120) mit seiner Kontaktfläche (138) an der Trittfläche (114) im Wesentlichen haften bleibt und sich der Türflügel (104) weiter in Richtung Tür-Schließposition bewegt, und wenn dann am Ende des zweiten Abschnitts des Schließvorgangs die Türflügel-Schließposition durch den Türflügel (104) endgültig erreicht ist, dann die wenigstens eine erste Hohlkammer (122; 122a-122e) den zweiten, verformten Querschnitt einnimmt.

3. Schwenkschiebetürvorrichtung nach Anspruch 2, **dadurch gekennzeichnet, dass** der Dichtabschnitt (120) wenigstens im Bereich der Kontaktfläche (138) eine nach außen ragende erste, quer zur Bewegung des Türflügels (104) verlaufende Verzahnung (156) aufweist, welche im Laufe des Schließvorgangs mit einer zweiten, quer zur Bewegung des Türflügels (104) verlaufenden Verzahnung (158) an der Trittfläche (114) in Eingriff und im Laufe des Öffnungsvorgangs außer Eingriff gerät.

4. Schwenkschiebetürvorrichtung nach einem der vorhergehenden Ansprüche, **dadurch gekennzeichnet, dass** die untere Türdichtung (116) einen sich an den Dichtabschnitt (120) anschließenden Stegabschnitt (126) insbesondere aus Vollmaterial aufweist, welcher in einen Halteabschnitt (128) übergeht, welcher an der Unterkante (118) des Türflügels (104) insbesondere lösbar befestigt ist.

5. Schwenkschiebetürvorrichtung nach Anspruch 4, **dadurch gekennzeichnet, dass** an der Unterkante (118) des Türflügels (104) eine Stützvorrichtung (130) derart angeordnet ist, dass zumindest der Stegabschnitt (126) während des Schließvorgangs in einer Gegenrichtung in Bezug zur Bewegungsrichtung (132) des Türflügels (104) abgestützt ist.

6. Schwenkschiebetürvorrichtung nach Anspruch 4 oder 5, **dadurch gekennzeichnet, dass** der Dichtabschnitt (120), der Stegabschnitt (126) und der Halteabschnitt (128) einstückig aus einem Elastomer-Material ausgebildet sind.

7. Schwenkschiebetürvorrichtung nach Anspruch 6, **dadurch gekennzeichnet, dass** der Halteabschnitt (128) in einer nutartigen Ausnehmung (134) an der Unterkante (118) des Türflügels (104) formschlüssig aufgenommen ist, wobei die nutartige Ausnehmung (134) einen hinterschnittenen Querschnitt aufweist, in welchen der Halteabschnitt (128) formschlüssig eingreift.

8. Schwenkschiebetürvorrichtung nach einem der Ansprüche 4 bis 7, **dadurch gekennzeichnet, dass** der Halteabschnitt (128) wenigstens eine zweite schlauchartige Hohlkammer (136) aufweist.

9. Schwenkschiebetürvorrichtung nach einem der vorhergehenden Ansprüche, **dadurch gekennzeichnet, dass** die Trittfläche (114) der Türschwelle (112) gegenüber der Horizontalen einen ersten Winkel (α) in einem Bereich von 10 Grad bis 15 Grad aufweist.

10. Schwenkschiebetürvorrichtung nach einem der vorhergehenden Ansprüche, **dadurch gekennzeichnet, dass** sie eine Schiebetrittanordnung (140) zur Überbrückung eines Spalts zwischen der Türschwelle (112) und einem in Bezug auf das Fahrzeug (100) externen begehbaren Bereich aufweist, welche einen zwischen einer eingefahrenen Schiebetritt-Ausgangsposition und einer ausgefahrenen Schiebetritt-Endposition antreibbaren Schiebetritt (142) umfasst, wobei der Schiebetritt (142) unterhalb der Türschwelle (112) ein- und ausschiebbar gelagert ist.

11. Schwenkschiebetürvorrichtung nach Anspruch 10, **dadurch gekennzeichnet, dass** sie eine Abstreifereinrichtung (144) aufweist, welche eine an einem freien Ende der Trittfläche (114) um eine horizontale Achse schwenkbare Klappe (146) aufweist, welche dazu ausgebildet und vorgesehen ist, um zum Abstreifen von Schmutz und Bilden einer Rampe auf dem Schiebetritt (142) in der Schiebetritt-Ausgangsposition, in der Schiebetritt-Endposition wie auch in Schiebetritt-Zwischenpositionen zwischen der Schiebetritt-Ausgangsposition und der Schiebetritt-Endposition aufzuliegen.

12. Schwenkschiebetürvorrichtung nach Anspruch 11, **dadurch gekennzeichnet, dass** die Klappe (146) ausgebildet ist, um einen Spalt zwischen einer in Gebrauchslage unteren Fläche (150) der Türschwelle (112) und einer in Gebrauchslage oberen Fläche (152) des Schiebetritts (142) abzudichten.

13. Schwenkschiebetürvorrichtung nach Anspruch 12, **dadurch gekennzeichnet, dass** die Klappe (146) gegenüber der oberen Fläche (152) des Schiebetritts (142) einen zweiten Winkel (β) in einem Bereich von 20 Grad bis 40 Grad aufweist.

14. Schwenkschiebetürvorrichtung nach einem der Ansprüche 11 bis 13, **dadurch gekennzeichnet, dass** eine Gelenkverbindung (154) zwischen der Klappe (146) und dem freien Ende der Türschwelle (112) vorgesehen ist.

15. Schwenkschiebetürvorrichtung nach einem der Ansprüche 11 bis 14, **dadurch gekennzeichnet, dass** in der Türflügel-Schließposition die Klappe (146) unter dem Dichtabschnitt (120) der unteren Türdichtung (116) vorsteht und den Dichtabschnitt (120) nicht kontaktiert.

16. Schwenkschiebetürvorrichtung nach einem der vorhergehenden Ansprüche, **dadurch gekennzeichnet, dass** die untere Türdichtung (116) einen unteren Abschnitt einer umlaufenden Türdichtung der Türdichtungsvorrichtung (106) bildet, welche an dem Umfang des Türflügels (104) umlaufend ageordnet ist.

17. Schwenkschiebetürvorrichtung nach einem der vorhergehenden Ansprüche, **dadurch gekennzeichnet, dass** der Dichtabschnitt (120) mehrere schlauchförmige, parallel zur Unterkante (118) des Türflügels (104) verlaufende erste Hohlkammern (122a-122e) aufweist, welche insbesondere parallel zueinander angeordnet.

18. Schwenkschiebetürvorrichtung nach Anspruch 17, **dadurch gekennzeichnet, dass** eine zentrale Hohlkammer (122a) vorgesehen ist, welche an in Umfangsrichtung gesehen von weiteren Hohlkammern (122b-122e) umgeben ist.

19. Schwenkschiebetürvorrichtung nach einem der vorhergehenden Ansprüche, **dadurch gekennzeichnet, dass** die untere Türdichtung (116) einstückig mit wenigstens einer seitlichen Türdichtung ausgeführt ist und in diese in einem gebogenen Abschnitt kontinuierlich übergeht.

20. Schwenkschiebetürvorrichtung nach einem der vorhergehenden Ansprüche, **dadurch gekennzeichnet, dass** die untere Türdichtung (116) an der Unterkante (118) oder im Bereich der Unterkante (118) des Türflügels (104) durch eine Einstellvorrichtung derart befestigt ist, dass eine vertikale Lage der unteren Türdichtung (166) in Bezug auf die Unterkante (118) des Türflügels (104) einstellbar ist.

21. Schwenkschiebetürvorrichtung nach einem der vorhergehenden Ansprüche, **dadurch gekennzeichnet, dass** die untere Türdichtung (116) an der Unterkante (118) oder im Bereich der Unterkante (118) des Türflügels (104) derart befestigt ist, dass eine vertikale Lage der unteren Türdichtung (166) in Bezug auf die Unterkante (118) des Türflügels (104) festgelegt ist.

22. Schienenfahrzeug (100) mit wenigstens einer Schwenkschiebetürvorrichtung (108) nach einem der vorhergehenden Ansprüche.

## Claims

1. Sliding plug door device (108) for arrangement in a door opening of a door opening of a vehicle (100), having
a) a door frame (102),
b) at least one sliding plug door, which has a door leaf (104) which is movable relative to the door frame and is mounted on the door frame (102) between a door leaf closed position and a door leaf open position such that the movement direction of the door leaf (104) extends substantially horizontally during an opening process and during a closing process,
c) a door sill (112) of the door frame (102) having a tread (114) which is inclined to the horizontal, for persons entering and alighting,
d) a door seal device (106) having a passive lower door seal (116) which seals a gap between a lower edge (118) of the door leaf (104) and the tread (114), wherein
e) the lower door seal (116) is fastened to the lower edge (118) or in the region of the lower edge (118) of the door leaf (104) and seals by a sealing section (120) against the inclined tread (114) when the door leaf is in the closed position, **characterised in that**
f) the sealing section (120) has at least one tubular first cavity (122; 122a-122e) which runs parallel to the lower edge (118) of the door leaf (104) and has a first non-deformed cross-section when the door leaf is in the open position and a second cross-section, which is deformed in comparison with the first cross-section, when the door leaf is in the closed position, and **in that**
g) a single door leaf (104) or two door leaves is/are provided at the sliding plug door, wherein the two door leaves move towards each other to close the door opening and away from each other to release the door opening.

2. Sliding plug door device according to claim 1, **characterised in that** the movement (132) of the door leaf (104) during the closing process, the inclination of the tread (114) relative to the horizontal, and the sealing section (120) are designed and adapted to one another such that, starting from the door leaf open position in which the first non-deformed cross-section of the at least one first cavity (122; 122a-122e) is present, at the end of a first section of the closing process of the door leaf (104) the sealing section (120) bears against the tread (114) with a contact surface (138), and that during a second section of the closing process subsequent to the first section, then the sealing section (120) remains substantially adhered to the tread (114) with its contact surface (138) and the door leaf (104) moves further in the direction of the door closed position and, when the door leaf closed position is finally reached by the door leaf (104) at the end of the second section of the closing process, the at least one first cavity (122; 122a-122e) adopts the second deformed cross-section.

3. Sliding plug door device according to claim 2, **characterised in that** the sealing section (120) has at least in the region of the contact surface (138) an outwardly protruding first toothing (156) which extends transversely to the movement of the door leaf (104) and which during the course of the closing process is brought into engagement with a second toothing (158) on the tread (114) extending transversely to the movement of the door leaf (104) and during the course of the opening process is brought out of engagement.

4. Sliding plug door device according to any of the preceding claims. **characterised in that** the lower door seal (116) has a web section (126), in particular made of solid material and adjoining the sealing section (120), said web section merging into a retaining section (128) which is, in particular releasably, fastened to the lower edge (118) of the door leaf (104).

5. Sliding plug door device according to claim 4, **characterised in that** a support device (130) is arranged on the lower edge (118) of the door leaf (104) such that during the closing process at least the web section (126) is supported in an opposing direction relative to the movement direction (132) of the door leaf (104).

6. Sliding plug door device according to claim 4 or 5, **characterised in that** the sealing section (120), the web section (126) and the retaining section (128) are configured integrally from an elastomer material.

7. Sliding plug door device according to claim 6, **characterised in that** the retaining section (128) is positively located in a groove-like recess (134) on the lower edge (118) of the door leaf (104), wherein the groove-like recess (134) has an undercut cross-section with which the retaining section (128) positively engages.

8. Sliding plug door device according to any of claims 4 to 7, **characterised in that** the retaining section (128) has at least one second tubular cavity (136).

9. Sliding plug door device according to any of the preceding claims, **characterised in that** the tread (114) of the door sill (112) has a first angle (α) ranging from 10 degrees to 15 degrees relative to the horizontal.

10. Sliding plug door device according to any of the preceding claims, **characterised in that** it has a sliding step arrangement (140) for bridging a gap between the door sill (112) and a walkable region which is external relative to the vehicle (100), said sliding step arrangement comprising a sliding step (142) which may be driven between a retracted sliding step initial position and an extended sliding step end position, wherein the sliding step (142) is mounted in a retractable and extendable manner below the door sill (112).

11. Sliding plug door device according to claim 10, **characterised in that** it has a scraper device (144) which has at a free end of the tread (114) a flap (146) which is pivotable about a horizontal axis and which is configured and provided in order to be positioned for scraping dirt and forming a ramp on the sliding step (142) in the sliding step initial position, in the sliding step end position and also in the sliding step intermediate positions between the sliding step initial position and the sliding step end position.

12. Sliding plug door device according to claim 11, **characterised in that** the flap (146) is configured to seal a gap between a lower surface (150) of the door sill (112) in the position of use and an upper surface (152) of the sliding step (142) in the position of use.

13. Sliding plug door device according to claim 12, **characterised in that** the flap (146) has a second angle (β) ranging from 20 degrees to 40 degrees relative to the upper surface (152) of the sliding step (142).

14. Sliding plug door device according to any of claims 11 to 13, **characterised in that** an articulated connection (154) is provided between the flap (146) and the free end of the door sill (112).

15. Sliding plug door device according to any of claims 11 to 14, **characterised in that** in the door leaf closed position the flap (146) protrudes below the sealing section (120) of the lower door seal (116) and is not in contact with the sealing section (120).

16. Sliding plug door device according to any of the preceding claims, **characterised in that** the lower door seal (116) forms a lower section of a peripheral door seal of the door seal device (106) which is arranged in a peripheral manner on the periphery of the door leaf (104).

17. Sliding plug door device according to any of the preceding claims, **characterised in that** the sealing section (120) has a plurality of tubular first cavities (122a-122e) which run parallel to the lower edge (118) of the door leaf (104) and which are arranged, in particular, parallel to one another.

18. Sliding plug door device according to claim 17, **characterised in that** a central cavity (122a) is provided, said central cavity being surrounded by further cavities (122b-122e) when viewed in the peripheral direction.

19. Sliding plug door device according to any of the preceding claims, **characterised in that** the lower door seal (116) is designed integrally with at least one lateral door seal and merges continuously therein in a curved section.

20. Sliding plug door device according to any of the preceding claims, **characterised in that** the lower door seal (116) lower door seal (116) is fastened to the lower edge (118) or in the region of the lower edge (118) of the door leaf (104) by an adjusting device, such that a vertical position of the lower door seal (166) is adjustable relative to the lower edge (118) of the door leaf (104).

21. Sliding plug door device according to any of the preceding claims, **characterised in that** the lower door seal (116) lower door seal (116) is fastened to the lower edge (118) or in the region of the lower edge (118) of the door leaf (104), such that a vertical position of the lower door seal (166) is fixed relative to the lower edge (118) of the door leaf (104).

22. Rail vehicle (100) having at least one sliding plug door device (108) according to any of the preceding claims.

## Revendications

1. Système (108) de porte louvoyante - coulissante à monter dans une ouverture de porte d'un véhicule (100), comprenant
a) un encadrement (102) de porte,
b) au moins une porte louvoyante - coulissante, qui a un battant (104) de porte, lequel est mobile par rapport à l'encadrement de la porte et est monté sur l'encadrement (102) de porte entre une position de fermeture du battant de la porte et une position d'ouverture du battant de la porte, de manière à ce que la direction de déplacement du battant (104) de la porte, pendant une opération d'ouverture et pendant une opération de fermeture, s'étende sensiblement à l'horizontale,
c) un seuil (112) de porte de l'encadrement (102) de la porte ayant un marchepied (114) incliné sur l'horizontale pour des personnes qui montent et qui descendent,
d) un système (106) d'étanchéité de porte ayant une étanchéité (116) de porte inférieure passive, qui rend étanche un intervalle entre un bord (118) inférieure du battant (104) de la porte et le marchepied (114), dans lequel
e) l'étanchéité (116) inférieure de la porte est fixée au bord (118) inférieur ou dans la partie du bord (118) inférieur du battant (104) de la porte et dans la position de fermeture du battant de la porte vient, par une partie (120) d'étanchéité, en étanchéité sur le marchepied (114) incliné, **caractérisé en ce que**
f) l'étanchéité (120) de porte a au moins une première chambre (122 ; 122a-122e) creuse s'étendant, en forme de boudin, parallèlement au bord (118) inférieur du battant (104) de la porte et ayant, dans la position d'ouverture du battant de la porte, une première section transversale non déformée et dans la position de fermeture du battant de la porte, une deuxième section transversale déformée par rapport à la première section transversale, et **en ce que**
g) il est prévu, à la porte louvoyante - coulissante, un seul battant (104) de la porte ou deux battants de la porte, dans lequel les deux battants de la porte s'appliquent l'un à l'autre pour la fermeture de l'ouverture de porte et s'éloignent l'un de l'autre pour dégager l'ouverture de porte.

2. Système de porte louvoyante - coulissante suivant la revendication 1, **caractérisé en ce que** le déplacement (132) du battant (104) de la porte pendant l'opération de fermeture, l'inclinaison du marchepied (114) sur l'horizontale et la partie (120) d'étanchéité sont réalisés et adaptés les uns aux autres, de manière à ce que, à partir de la position d'ouverture du battant de la porte, dans laquelle il y a la première section transversale non déformée de la au moins une première chambre (122 ; 122a-122e) creuse, à la fin d'une première partie de l'opération de fermeture du battant (104) de la porte, la partie (120) d'étanchéité s'applique au marchepied (114) par une surface (138) de contact, et **en ce que**, pendant une deuxième partie de l'opération de fermeture, se raccordant dans le temps à la première partie, la partie (120) d'étanchéité reste sensiblement adhérente par sa surface (138) de contact au marchepied (114) et le battant (104) de la porte continue à se déplacer dans la direction de la position de fermeture et, lorsqu'à la fin de la deuxième partie de l'opération de fermeture, la position de fermeture du battant de la porte est atteinte finalement par le battant (104) de la porte, la au moins une première chambre (122 ; 122a-122e) creuse prend alors la deuxième section transversale déformée.

3. Système de porte louvoyante - coulissante suivant la revendication 2, **caractérisé en ce que** la partie (120) d'étanchéité a, au moins dans la région de la surface (138) de contact, une première denture (156) en saillie vers l'extérieur, qui s'étend transversalement au déplacement du battant (104) de la porte et qui, au cours de l'opération de fermeture, vient en prise avec une deuxième denture (158), s'étendant transversalement au déplacement du battant (104) de la porte, sur le marchepied (114) et vient hors de prise au cours de l'opération d'ouverture.

4. Système de porte louvoyante - coulissante suivant l'une des revendications précédentes, **caractérisé en ce que** l'étanchéité (116) inférieure de porte a une partie (126) d'entretoise, se raccordant à la partie (120) d'étanchéité, en particulier en matériau plein, qui se transforme en une partie (128) de maintien, qui est fixée, en particulier de manière amovible, au bord (118) inférieur du battant (104) de la porte.

5. Système de porte louvoyante - coulissante suivant la revendication 4, **caractérisé en ce que,** sur le bord (118) inférieur du battant (104) de la porte, est monté un dispositif (130) d'appui, de manière à ce qu'au moins la partie (126) d'entretoise s'appuie, pendant l'opération de fermeture, dans un sens contraire par rapport au sens (132) de déplacement du battant (104) de la porte.

6. Système de porte louvoyante - coulissante suivant la revendication 4 ou 5, **caractérisé en ce que** la partie (120) d'étanchéité, la partie (126) d'entretoise et la partie (128) de maintien sont constituées d'une seule pièce en un matériau élastomère.

7. Système de porte louvoyante - coulissante suivant la revendication 6, **caractérisé en ce que** la partie (128) de maintien est reçue à complémentarité de forme dans un évidement (134) de type en rainure du bord (118) inférieur du battant (104) de la porte, dans lequel l'évidement (134) de type en rainure a une section transversale à contredépouille, dans laquelle la partie (128) de maintien pénètre à complémentarité de forme.

8. Système de porte louvoyante - coulissante suivant l'une des revendications 4 à 7, **caractérisé en ce que** la partie (128) de maintien a au moins une deuxième chambre (136) creuse de type en boudin.

9. Système de porte louvoyante - coulissante suivant l'une des revendications précédentes, **caractérisé en ce que** le marchepied (114) du seuil (112) de porte fait, par rapport à l'horizontale, un premier angle (α) dans une plage de 10 degrés à 15 degrés.

10. Système de porte louvoyante - coulissante suivant l'une des revendications précédentes, **caractérisé en ce qu'**il a un dispositif (140) de marchepied pour faire un pont sur un intervalle entre le seuil (112) de porte et une partie pouvant être empruntée et extérieure par rapport au véhicule (100), dispositif qui comprend un marchepied (142) pouvant être entraîné entre une position initiale escamotée du marchepied et une position finale déployée, dans lequel le marchepied (142) est monté de manière à pouvoir être escamoté et déployé en-dessous du seuil (112) de porte.

11. Système de porte louvoyante - coulissante suivant la revendication 10, **caractérisé en ce qu'**il a un dispositif (144) de balayage, qui a un volet (146) pivotant autour d'un axe horizontal à une extrémité libre du marchepied (114), volet, qui est constitué et prévu pour balayer de la saleté et former une rampe sur le marchepied (142) dans la position initiale du marchepied, dans la position finale du marchepied, tout comme dans des positions intermédiaires du marchepied entre la position initiale du marchepied et la position finale du marchepied.

12. Système de porte louvoyante - coulissante suivant la revendication 11, **caractérisé en ce que** le volet (146) est constitué pour rendre étanche un intervalle entre une surface (150) inférieure, en position d'utilisation, du seuil (112) de porte et une surface (152) supérieure, en position d'utilisation, du marchepied (142).

13. Système de porte louvoyante - coulissante suivant la revendication 12, **caractérisé en ce que** le volet (146) fait, avec la surface (152) supérieure du marchepied (142), un deuxième angle (β) dans une plage de 20 degrés à 40 degrés.

14. Système de porte louvoyante - coulissante suivant l'une des revendications 11 à 13, **caractérisé en ce qu'**une liaison (154) articulée est prévue entre le volet (146) et l'extrémité libre du seuil (112) de porte.

15. Système de porte louvoyante - coulissante suivant l'une des revendications 11 à 14, **caractérisé en ce que,** dans la position de fermeture du battant de la porte, le volet (146) est en saillie sous la partie (120) d'étanchéité de l'étanchéité (116) inférieure de la porte et n'est pas en contact avec la partie (120) d'étanchéité.

16. Système de porte louvoyante - coulissante suivant l'une des revendications précédentes, **caractérisé en ce que** l'étanchéité (116) inférieure de la porte forme une partie inférieure d'une étanchéité de porte faisant le tour du dispositif (106) d'étanchéité de porte, lequel est disposé en faisant le tour sur le pourtour du battant (104) de la porte.

17. Système de porte louvoyante - coulissante suivant l'une des revendications précédentes, **caractérisé en ce que** la partie (120) d'étanchéité a plusieurs premières chambres (122a-122e) creuses en forme de boudin s'étendant parallèlement au bord (118) inférieur du battant (104) de la porte et disposées notamment en étant parallèles entre elles.

18. Système de porte louvoyante - coulissante suivant la revendication 17, **caractérisé en ce qu'**il est prévu une chambre (122a) creuse centrale, qui est entourée, et considéré dans la direction du pourtour, d'autres chambres (122b-122e) creuses.

19. Système de porte louvoyante - coulissante suivant l'une des revendications précédentes, **caractérisé en ce que** l'étanchéité (116) inférieure de la porte est réalisée en une seule pièce avec au moins une étanchéité latérale de la porte et se transforme d'une manière continue en celle-ci en une partie incurvée.

20. Système de porte louvoyante - coulissante suivant l'une des revendications précédentes, **caractérisé en ce que** l'étanchéité (116) inférieure de la porte est fixée au bord (118) inférieure ou dans la partie du bord (118) inférieur du battant (104) de la porte par un dispositif de réglage, de manière à pouvoir régler une position verticale de l'étanchéité (166) inférieure de la porte par rapport au bord (118) inférieur du battant (104) de la porte.

21. Système de porte louvoyante - coulissante suivant l'une des revendications précédentes, **caractérisé en ce que** l'étanchéité (116) inférieure de la porte est fixée au bord (118) inférieure ou dans la partie du bord (118) inférieur du battant (104) de la porte, de manière à fixer une position verticale de l'étanchéité (166) inférieure de la porte par rapport au bord (118) inférieur du battant (104) de la porte.

22. Véhicule (100) ferroviaire ayant au moins un système (108) de porte louvoyante - coulissante suivant l'une des revendications précédentes.
